(19) Europäisches Patentamt
European Patent Office
Office européen des brevets

(11) **EP 2 388 879 A1**

(12) **EUROPEAN PATENT APPLICATION**

(43) Date of publication:
**23.11.2011 Bulletin 2011/47**

(51) Int Cl.:
*H02H 7/26* (2006.01)     *H02J 3/38* (2006.01)

(21) Application number: **10161512.8**

(22) Date of filing: **29.04.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(71) Applicant: **ABB Research Ltd.
8050 Zürich (CH)**

(72) Inventors:
• **Oudalov, Alexandre
CH-5442, Fislisbach (CH)**

• **Deck, Bernhard
D-79809, Weilheim (DE)**
• **Goerlitz, Otmar
CH-5442, Fislisbach (CH)**

(74) Representative: **ABB Patent Attorneys
C/o ABB Schweiz AG
Intellectual Property (CH-LC/IP)
Brown Boveri Strasse 6
5400 Baden (CH)**

(54) **Protection of power lines**

(57)     A protection scheme for a distribution feeder 12 is proposed that may combine information from all power sources 16, 18 on the feeder 12 and may provide optimal protection under all configurations of local power sources 18 without requiring an update or adaptation of the feeder protection to the current configuration.

Fig. 1

## Description

FIELD OF THE INVENTION

The invention relates to the field of the protection of power lines. In particular, the invention relates to a method for protecting a component of a power distribution system, a computer readable medium, a program element, a protection device and a power distribution system.

BACKGROUND OF THE INVENTION

Many elements of a power system may have to be protected from failures such as short circuits and overloads for the safety of people and equipment. One protection method may be to physically isolate a faulty element from the rest of the power system either by circuit breakers or fuses. For example, it may be possible that a current in the power system exceeds a predetermined value at a specific point of the system, for example a power line, and this may indicate the presence of a fault. An element to be protected may be a distribution feeder that may be used to transport electrical energy from a power grid to a plurality of power consumers.

In a passive (only one power source and several loads are connected), radial distribution feeder the current always flows from the power source downstream to loads and the feeder may be effectively protected by non-directional over-current protection.

Today there is a clear trend towards having more renewable energy generation pushed by governments and other regulation authorities. Private investors may receive attractive tax reduction and in-feed tariffs that encourage them to install medium size distributed energy resources located close to the end consumers, for example in an medium voltage distribution grid. These distributed energy resources (in the following also called local power sources) may be wind turbines, photovoltaic solar farms, micro-turbines, geothermal and mini-hydro plants which typically may work in the range between 1 and 10 MVA.

Distributed Energy Resources (DER) may be small-scale power generation sources located close to where electricity is used (e.g., residential consumers, small and medium commercial and industrial facilities, etc.) and may provide an alternative to or an enhancement of the traditional electrical power grid.

It may be possible that many distributed energy resources are electrically connected with one distribution feeder. In this case, the direction and the amplitude of current may be very different from a passive, radial distribution feeder.

DESCRIPTION OF THE INVENTION

It is an object of the invention to improve the protection of a power distribution system, in particular for components of the power distribution system connected to a distribution feeder electrically connected with distributed energy resources.

This object is solved by the subject-matter of the independent claims. Exemplary embodiments of the invention are evident from the dependent claims.

A first aspect of the invention relates to a method for protecting a component of a power distribution system. The component is connected to a distribution feeder. For example, the component may be the distribution feeder itself, a busbar or a transformer, which may be directly or indirectly connected or connectable with the distribution feeder.

A distribution feeder or power distribution feeder may be a part of a power distribution system which may be used to distribute electrical power from at least one energy source to a plurality of power consumers, for example to end consumers. A distribution feeder may be a power line which, for example, starts at an electrical substation, for example a substation transforming high voltage power to medium voltage power to be distributed by the distribution feeder. In particular, the power distribution feeder may be adapted to distribute medium voltage and low voltage.

A distribution feeder may constitute a distribution network for distribution electrical energy. Distribution networks may be typically of two types, radial or interconnected (see for example Spot Network Substations). A radial network may leave the station and pass through the network area with no normal connection to any other supply. This is typical of long rural lines with isolated load areas. An interconnected network may be generally found in more urban areas and may have multiple connections to other points of supply. These points of connection may normally be open but may allow various configurations by the operating utility by closing and opening switches.

According to an embodiment of the invention, the method comprises the step of: receiving a first measurement value of a current in a first supply line that may be connected (or electrically connectable) with the distribution feeder at a first connection point. It has to be understood, that the first supply line may be also connected (but not electrically connected) with the distribution feeder, when a switch between the first supply line and the distribution feeder is open. In other words, it may be possible, that the first supply line is adapted to be connected with the distribution feeder at the first connection point.

According to an embodiment of the invention, the method comprises the step of: receiving a second measurement value of a current in a second supply line that may be connected (or electrically connectable) with the distribution feeder at a second connection point. Also in this case, it may be possible, that the second supply line may be adapted to be connected with the distribution feeder at a second connection point.

All in all, there is also the possibility, that the first supply line and the second supply line may be parts of the distribution feeder, for example the first supply line may be a first part of the distribution feeder that is connected with a system supplying the distribution feeder with electrical energy.

The first connection point and the second connection point may be different connection points which may be remote from each other. In other words, the first supply line and the second supply line may be remote from each other. In this context, remote may mean, that the first connection point and the second connection point may have a distance from each other which is bigger than 100 m, 1 km or even more than 10 km. For example, the first supply line may be electrically connected with an end of the distribution feeder. In other words, the first connection point may be one end of the distribution feeder. The second supply line may be connected to a middle point of the distribution feeder. In other words, the second connection point may be a middle point of the distribution feeder. However, it may also be possible, that the second connection point may be a further end point of the distribution feeder.

The first and second supply lines may be adapted to supply the distribution feeder with electrical energy. I. e. during operation current is flowing from a supply line into the distribution feeder. To this end, the first supply line may be connected to a first energy source and the second supply line may be connected to a second energy source.

According to an embodiment of the invention, the method comprises the step of: actuating or triggering a switch or circuit breaker, by a protection device and based on the first and second measurement values. The protection device may receive measurement values from different remote points of the power system comprising the distribution feeder and may decide on the basis of the first and the second measurement value, if the switch has to be activated or actuated. To this end, the protection device may comprise a controller in which a protection function processing the first and second measurement values is executed upon the receiving of the measurement values.

The protection device is adapted to protect the component of the power distribution system, for example by disconnecting the component from the first power source or the power distribution feeder, or by deactivating the component.

According to an embodiment of the invention, the first supply line may connect the distribution feeder with a power grid. For example, the first supply line may be a power line connecting the distribution feeder with a transformer station, which is adapted to transform high voltage power to medium voltage power.

According to an embodiment of the invention, the second supply line may connect the distribution feeder with a local power source. As a rule, a local power source may generate electric energy in the medium voltage range. A medium voltage may be a voltage in the range from 1 to 70 kV. However, it may also be possible that the local power source is generating power in the high voltage range (i.e. in the range above 70 kV) or in the low voltage range (i.e. the range below 1 kV).

The local power source, i.e. the distributed energy resource, may be remote from the transformer station and the second supply line may supply the distribution feeder with further electrical energy from the local power source.

According to an embodiment of the invention, the protection device is adapted to electrically disconnect the component from the first supply line.

According to an embodiment of the invention, the protection device is a feeder protection device and the feeder protection device is adapted to electrically disconnect the distribution feeder from the first supply line. In other words, the distribution feeder is protected in that the first supply line is disconnected from the distribution feeder, in particular, the power grid from the distribution feeder. For example, the feeder protection device may comprise a protection relay and a controller with a digital processor. The relay of the feeder protection device may send a tripping signal to a switch or circuit breaker controlled by the feeder protection device. In reaction to the tripping signal, the circuit breaker physically opens the contacts and breaks the current path, i. e. it electrically disconnects the feeder from the first supply line.

In general, the protection device may control or command an electrical switch (for example a circuit breaker) which may be adapted to disconnect the component from a grid supplying the distribution feeder with electrical energy or from the distribution feeder.

The controller of the protection device may be adapted to execute a protection function. The protection function may be a function executed by the digital processor of the controller which, for example, decides about the disconnection of the distribution feeder from the first supply line (the first power grid).

It may however be possible, that the protection function is at least partially hardwired in the controller and not implemented by software.

The protection device may receive the second measurement value from a current in the second supply line connecting a local power source with the distribution feeder which is remote from the main feeder protection, i.e. the protection device.

According to an embodiment of the invention, a second protection device as being described in the above and in the following may be adapted to protect a further component of the power distribution system. The further component may the distribution feeder.

According to an embodiment of the invention, the method comprises the step of: measuring the first measurement value with a first measurement device coupled to the first supply line.

According to an embodiment of the invention, the method comprises the step of: measuring the second measurement value with a second measurement device coupled to the second supply line.

According to an embodiment of the invention, the method comprises the step of: receiving a third measurement value of a current in a third supply line. The third supply line may connect a further or second local power source with the distribution feeder. The actuation of the protection device may additionally be based on the third measurement value.

According to an embodiment of the invention, the method comprises the step of: receiving a switch state of a switch in the distribution feeder. The switch state of a switch may indicate whether the switch is open or the switch is closed, i.e. whether the one part of the distribution feeder on the one side of the switch is electrically connected with the other part of the distribution feeder on the other side of the switch. In other words, the switch may be adapted to disconnect one part of the distribution feeder from one other.

According to an embodiment of the invention, the actuation by the protection device is additionally based on the switch state. For example, the protection function being executed in the controller of the protection device is additionally supplied with the switch state of the switch and decides about the actuation, for example about the disconnection of the distribution feeder from the first power source, based on the first, second (or third) measurement values and the switch state.

According to an embodiment of the invention, the method comprises the step of: determining the actuation with a protection function. As already said, this protection function may be executed in a controller of the protection device.

According to an embodiment of the invention, the method further comprises the step of: calculating an effective value of a current in the distribution feeder from the first and second (and third) measurement value (and optionally at least one switch state). In other words, the protection function has input parameters which relate to the first, second and/or third measurement value and optionally the switch state. From these input parameters, an effective value of a current is calculated on behalf of the protection function. For example, the effective value may be based on a combination (for example the sum) of the first and second measurement value. Due to the calculation of the effective value, the actuation of the protection device is not only based on the local current in the first supply line which may be disconnected by the protection device from the distribution feeder, but also on currents (for example the second measurement value and/or the third measurement value) which have been measured remote from the first supply line. The effective value may also be based on further states of the distribution feeder and the power distribution system of devices remote from the first supply line and remote from the protection device. For example, the protection function may be fed with switch states of switches in the distribution feeder.

In other words, a main feeder protection relay is informed about the DER infeed to the distribution feeder due to at least one local power source (in particular RMS-values and direction of the current), aggregates the DER infeed values together with the grid infeed values to the distribution feeder, and processes the resulting value as an effective infeed current in the distribution feeder via the standard overcurrent protection function of the relay.

According to a further embodiment of the invention, the effective value is based on the first measurement value, when a switch state of the feeder indicates that the second supply line is electrically disconnected from the first supply line, and the effective value is based on the combination or the sum of the first and second measurement value, when the switch state indicates that the second supply line is electrically connected with the first supply line. It may be possible, that a switch between the first connection point and the second connection point is open, and in this case, the first supply line and second supply line may be electrically disconnected. In this case, the effective value may be based only on the first measurement value and further measurement values on the part of the distribution feeder that is not electrically disconnected from the first supply line. In the case, when the switch is closed, the second part of the distribution feeder on the other side of the switch is electrically connected with the first part of the distribution feeder and in particular with the first supply line. In this case, the effective value additionally may be based on further measurement values, in particular on the second measurement value measured on the other side of the switch.

According to an embodiment of the invention, the method comprises the step of: transmitting the second measurement value and/or the third measurement value and/or the switch state over a communication network. The second and/or third measurement value and/or the switch state may be digitized by the respective sensors or by a further device receiving these values and may be sent over a communication network to the (controller of the) protection device. To this end, an already existing communication network, for example an Ethernet or an Internet may be used for transmitting the measurement data. The controller of the protection device and the respective sensors (and switches) may have to be connected to the communication network.

In this case, already existing communication infrastructure may be used to transmit the measurement values and/or the switch state measured remote from the protection device to the protection device.

According to an embodiment of the invention, the communication network is an Ethernet network. For example, the measurement values may be transported over the Ethernet network by a network protocol adapted for Ethernet. For example, the measurement values (and also the switch states) may be transmitted using GOOSE. Generic Object Oriented Substation Events (GOOSE) may be describe as a control model mechanism in which any format of data (status, value) is grouped into a data set and transmitted over a network.

According to an embodiment of the invention, the method comprises the step of: transmitting the second measurement value as an average value of the current. For example, the current or all the current, in particular the currents in the first, second and third supply line and in the distribution feeder may be AC currents. An average value of the current may be a root mean square value of an alternating current.

According to an embodiment of the invention, the method comprises the step of: transmitting the second measurement value in a raw format or as a result of a signal processing of the raw measurements. The raw format may comprise digitized directly measured values.

According to an embodiment of the invention, the method comprises the step of: providing the second measurement value (and/or the first measurement value and/or the switch state) with a time stamp, the time stamp indicating the time of the measurement of the second measurement value (or the respective other value).

With such a time stamp, the protection device may have additional information about the respective measurement value and may base its decision about activating or deactivating the protection of the distribution feeder additionally on the time stamps.

According to an embodiment of the invention, the method comprises the step of: buffering the first measurement value until the second measurement value provided with the time stamp of the first measurement value has been received. It may be possible, that the controller of the protection device stores the received measurement value and waits until measurement values from different points of the power distribution system with equal time stamps have been received. It may be possible, that the transmission of the measurement values and/or switch states measured at points of the power distribution system remote from the protection device travel a not predictable time, due to transmission delays of the communication network, until they arrive at the protection device.

Buffering may be a possibility to deal with a different availability of local and remote measurements. Alternatively, a delay may be introduced to the local measurement.

According to an embodiment of the invention, the method comprises the step of: buffering the first and second measurement values (and optionally the switch state) such that values with equal time stamps are used for calculating an effective value to be used for executing the protection function.

According to an embodiment of the invention, the method comprises the steps of: Informing a protection device (for example a main protection relay) about the infeed of at least one local power source, in particular about RMS-values of the currents of the infeed and/or the directions of the currents of the infeed); Aggregating the infeed values of the local energy sources and the grid infeed values to an effective value; and Presenting the resulting effective value to the over-current protection function of the protection device. Thus, the protection device may again see the total infeed and may react correctly, based on its original settings.

A further aspect of the invention relates to a computer readable medium, in which a program element or computer program for protecting a component of a power distribution system connected to a distribution feeder is stored, which, when being executed by a processor, for example a processor of the controller of the protection device, is adapted to carry out the steps of the method to protect a distribution feeder as described in the above and in the following.

A computer-readable medium may be a floppy disk, a hard disk, a CD, a DVD, an USB (Universal Serial Bus) storage device, a RAM (Random Access Memory), a ROM (Read Only memory) and an EPROM (Erasable Programmable Read Only Memory). A computer readable medium may also be a data communication network, e.g. the Internet, which allows downloading a program code.

A further aspect of the invention relates to a program element or computer program for protecting a component of a power distribution system connected to a distribution feeder, which, when being executed by a processor, is adapted to carry out the steps of the method as described in the above and in the following.

The present invention also relates to a computer program product including computer program code for controlling one or more processors of a device adapted to be connected to a communication network and/or configured to store a standardized configuration representation, particularly, a computer program product including a computer readable medium containing therein the computer program code.

A further aspect of the invention relates to a protection device which is adapted to carry out the steps of a method described in the above and in the following. As already said, it may be possible that the protection device comprises a controller with a processor which is adapted to carry out the steps of the method. For protecting the component, the protection device may comprise a protection relay or a switch for switching the current in the first supply line.

A further aspect of the invention relates to a power distribution system.

According to an embodiment of the invention, the power distribution system comprises a distribution feeder connected to a power grid, a local power source connected with the distribution feeder, and a protection device as described in the above and in the following.

For example, the protection device may be located at the connection point of the distribution feeder with the power grid, for example the first connection point of the first supply line. It may be possible, that the power grid is a high voltage power grid and the protection device and the first supply line are located at a transformer station comprising a transformer for transforming the high voltage to medium voltage to be supplied to the distribution feeder. The local power source or distributed energy source may be connected with the distribution feeder remote from the protection device and the protection device may receive the second measurement value from the second supply line from a remote point of the power distribution system.

According to an embodiment of the invention, the invented apparatus comprises a feeder protection relay implementing at least over-current protection against short-circuit and/or overload; one or more current measuring devices connected at specific points of the distribution feeder, and a communication infrastructure that allows sending data from each measuring device to the protection relay. The communication infrastructure may also support the transmission of data from the protection relay back. The invention may relate to the protection of a feeder in an electrical network against abnormal operating conditions when one or more distributed generation units are connected to this feeder.

The concept of the proposed protection scheme may combine information from all power sources on the feeder and provides optimal protection under all DER configurations, without requiring an update or adaptation of the feeder protection parameters (settings) to the current configuration.

The protection scheme may include independent main feeder and DER protection, communication, and (algorithmic) preparation of input values for the protection functions.

According to an embodiment of the invention, a protection scheme for distribution feeders with DER is proposed which will operate correctly under the presence of DER.

The proposed protection scheme may satisfy the following technical requirements: It may be implementable in conjunction with the conventional over-current protection, compensating its deficiencies, but retaining the base protection for the feeder. It may be independent of the number and status of DER connected to the feeder. It may not modify relay settings of the main and DER protection. It may operate within a typical time range of protection functions.

Circuit breakers may be triggered by protection relays. Today, most of newly installed protection relays are digital, except some niche markets where electromechanical and solid state relays are in use.

Digital protection relays may usually host several protection functions running in parallel, e.g. over-current protection, differential protection, etc. and have multiple setting groups for each function.

At least some of the protection settings may have to guarantee a required level of sensitivity, selectivity and speed of relay operation. They may be defined at engineering time and may cover all power system states anticipated at that time. It may be the responsibility of the operator or the protection engineer at the utility to set the correct active setting group. As a rule, from the utilities point of view the protection scheme should not modify the relay settings since adapting the settings may adapt them to a fault condition.

Taking into account an intermittent nature of renewable energy resources such as wind and solar generation, there may be frequent variations in the current (amplitude and direction) flowing between the distribution feeder and the rest of distribution grid. In light of this, there may be an increased number of cases where a (conventional) main over-current protection device located in the head of the feeder may not guarantee a detection of the abnormal feeder operating conditions including various faults and overloads.

In order to support customers and utilities to exploit full range of technical and economic advantages associated with DERs there may be a need for a product able to fulfill all the protection coordination requirements.

These and other aspects of the invention will be apparent from and elucidated with reference to the embodiment described hereinafter.

BRIEF DESCRIPTION OF THE DRAWINGS

Below, embodiments of the present invention are described in more detail with reference to the attached drawings.

Fig. 1 shows a schematic diagram of a power distribution system according to an embodiment of the invention.

Fig. 2 shows a schematic diagram of a power distribution system according to a further embodiment of the invention.

Fig. 3 shows a diagram for a protection function according to an embodiment of the invention.

Fig. 4 shows a flow diagram for a method for protecting a distribution feeder according to an embodiment of the invention.

Fig. 5 shows a schematic diagram of a power distribution system according to a further embodiment of the invention.

Fig. 6 shows a schematic diagram of a power distribution system according to a further embodiment of the invention.

Fig. 7 shows a schematic diagram of a power distribution system according to a further embodiment of the invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

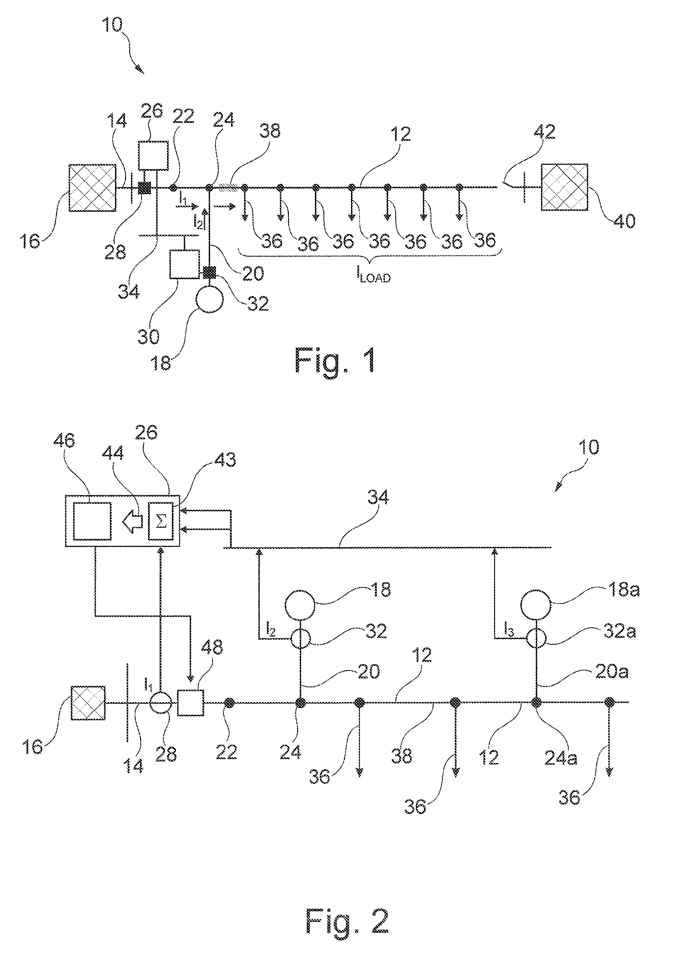

Fig. 1 shows a power distribution system 10 with a distribution feeder 12 that is connected over a first supply line 14 with a first power source 16 that may be a first power grid or a transformer station. The first local power source 18 (or distributed energy resource 18) is electrically connected over a second supply line 20 with the distribution feeder 12. The first supply line 14 is connected with the distribution feeder at the connection point 22; the second supply line 20 is connected with the distribution feeder 12 at the second connection point 24. The two connection points 22, 24, the first supply line 14 and the second supply line 20 and/or a transformer station located at one end of the first supply line 14 and the local power source 18 may be remote from each other.

The transformer station 16 from the power grid to the first supply line 14 comprises a main feeder protection device 26, which measures a current $I_1$ in the first supply line 14 via a first sensor 28. A further protection device 30 measures a second current $I_2$ in the second supply line 20 with a further sensor 32 coupled to the second supply line 20. Each of the devices 28, 32 may further comprise a switch 28, 32, that is adapted to connect and disconnect the power grid from the distribution feeder 12 and the local power source 18 from the distribution feeder 12, respectively.

Besides the distribution feeder 12, also a transformer and busbars in the transformer station may be protected by the protection device 26.

The feeder protection device 26 is connected with a communication bus 34. Also, the further protection device 30 is connected with the communication bus 34. At further connection points, the distribution feeder 12 is connected with a plurality of power consumers 36. Power consumers 36 consume the (variable) current $I_{load}$ from the distribution feeder 12.

It may be possible, that the power consumers 36 draw as much current from the power distribution feeder 12, such that the overall current in the distribution feeder 12 causes a feeder segment overload in the segment 38 "downstream" from the power grid 16 and the local power source 18. "Downstream" may mean that the feeder segment 38 is supplied with current from the local power source 18 and the power grid 16.

As the main feeder protection device 36 receives the measurement value $I_2$ over the communication network 34 from the further protection device 30 or the sensor 32, it is possible, that the feeder protection device 26 can calculate an effective value from the first measurement value $I_1$ and the second measurement value $I_2$ and may base the decision of disconnecting the first supply line 14 from the distribution feeder 12 on these two values. For example, the main feeder protection device 26 may sum up the two values $I_1$ and $I_2$ and may base the decision on the sum.

Fig. 1 further indicates that the power distribution feeder 12 may be also connected to a second power grid 40 and may be electrically connected with the aid of a switch 42 situated at a further end of the distribution feeder 12 connecting the distribution feeder 12 with the power grid 40. The switches 28, 32 and 42 may, for example, be circuit breakers. The circuit breaker 42 may be open in the normal case.

Fig. 2 shows a further embodiment of a power distribution system 10 with a distribution feeder 12 connected to a power grid 16, a first local power source 18 and a second local power source 18a. The first local power source 18 is connected with the distribution feeder 12 at the connection point 24, the second local power source 18a over the third supply line 20a at a connection point 24a. The connection points 24, 24a may be remote from each other. In Fig. 2 it is further indicated that power consumers 36 are connected to the distribution feeder 12 at connection points between the two connection points 24, 24a.

A sensor 32 measuring a current $I_2$ in the second supply line 20 is adapted to send measurement values over a communication bus 34 to the feeder protection device 26. Also a sensor 32a in the third supply line 20a is adapted to send measurement values of a current $I_3$ in the third supply line over the communication bus 34 to the feeder protection device 26. The feeder protection device 26 is further adapted to receive measurement values of a current $I_1$ in the first supply line 14 measured by a sensor 28.

The feeder protection device 26 may comprise a controller with a processor that is adapted to process the received measurement values. The controller of the feeder protection device 26 may comprise a first software module 43 that is adapted to calculate an effective value 44 from the received measurement values $I_1$ $I_2$ and $I_3$. In one case, this software module calculates the sum of these values as effective value 44. The effective value 44 is an input value 44 of a second software module 46 of the controller which decides whether to disconnect the distribution feeder 12 from the grid 16 or not.

Based on this decision, the feeder protection device 26 triggers the opening or closing of the switch or circuit breaker 48. For example, in the case when the software module 46 decides to disconnect the distribution feeder 12, it causes the feeder protection device 26 to open the switch 48. The switch 48 may be part of the feeder protection device 26.

The current injected on the distribution feeder 12 by the local power source 18 is measured directly at the source. A communication channel 34 exists between the local power source 18 and the main feeder protection device 26 allowing transmission of measurement values. At the main protection device 26 the remote measurements $I_2$, $I_3$ are combined with local measurements $I_1$. The local measurements $I_1$ indicate the current infeed from the main grid 16 to the distribution feeder 12. The combined measurements (effective value) 44 indicate the total current infeed on the distribution feeder 12.

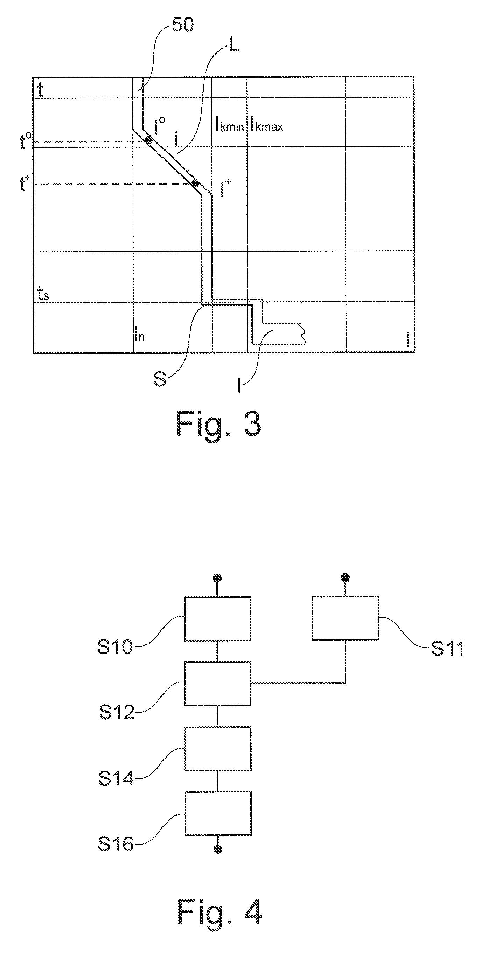

This total current 44 is presented as input value 44 to the overcurrent protection function 46 of the main protection device 26. If the total current 44 exceeds the allowed limitations given by the protection characteristic (for example the protection characteristic shown in Fig. 3), the relay 26 will react in the same manner as it would if the total current infeed was supplied by the main grid.

Fig. 3 shows a diagram with a protection characteristic 50 that may be used by the software module 46. The diagram of Fig. 3 shows a time(t)-current(I)-tripping curve on which several protection schemes are present. The protection characteristic 50 indicates when, dependent on the actual current I, the switch 48 or circuit breaker 48 adapted to disconnect the distribution feeder 12 from the power grid 16 is activated. As an example, when the software module 46 gets an input value of $I^0$ the protection device 26 will activate the switch 48 after a delay time $t^0$.

The protection characteristic 50 has several parts: The part L is used for a protection against overload. The part indicated with S is used for a protection against short circuit with disconnection after a fixed time delay, and the part indicated with I against short circuit with instantaneously disconnection without any time delay.

The distribution feeder 12 may be a typical radial medium voltage feeder 12 protected by the overcurrent relay 28 in the head of the feeder (main feeder protection).

In the case without local power source ($I_2=I_3=0$) the main protection relay 26 sees the total current infeed ($I_1=I_{LOAD}$) from the grid 16. For example, in case if the feeder segment 38 is overloaded due to a variation of $I_{LOAD} > In$ (the maximum admissible load of the cable of the feeder 12) the over-current protection acts with a time delay $t^+$ in accordance with its I-t tripping characteristic (part L) as shown in Fig. 3.

When a local energy source 18 is electrically connected to the feeder 12, its status (on/off) and generation level may be unknown to the main protection relay 26. The local power source 18 may be equipped with its own protection relay which monitors the current status of the local power source 18.

A power generation of the local power source 18 will reduce the current flow $I_1$ from the power grid 16 into the distribution feeder 12 by the value of the current $I_2$ injected by the local power source 18 in the case of constant load $I_{LOAD}$.

If the main protection relay 26 only based its calculations on $I_1$, in the case of the feeder overload $I_{LOAD} > I_n$, the main protection relay 26 would trip with the time delay $t° > t^+$ or may not trip at all because its trip characteristic would assume seeing the total current infeed ($I_1$), which is not true for a distribution feeder 12 connected with local power sources 18, 18a.

As shown in Fig. 1, the measurement value $I_2$ of the current of the local power source 18 is communicated to the main protection relay 26 by the communication bus 34. The main protection relay 34 calculates the sum $I_1+I_2$ and uses the result as an input for the overcurrent protection function 46. The relay 26 will react within intended time delay $t^+$.

This can be extended to more than one local power source 18, 18a connected to the feeder 12 at different places 24, 24a. Again a communication infrastructure 34 must exist for transmitting current measurements $I_2$, $I_3$ from each local power source 18, 18a to the main protection relay 26. There all incoming measurements $I_1$, $I_2$, $I_3$ will be combined and presented to the protection function 46. Essentially, the protection function 46 will compare the sum of all current injections on the feeder 12 with the protection characteristic 50. The measurement values $I_2$, $I_3$ of the current of the local power source 18, 18a are communicated to the main protection relay 26 by the communication bus 34. The main protection relay 34 calculates the sum $I_1+I_2+I_3$ and uses the result as an input 44 for the over-current protection function 46. The relay 26 will react within intended time delay t+.

Fig. 4 shows a flow diagram for a method for protecting the distribution feeder 12.

In a step S10, the sensors 32, 32a measure the current $I_2$, $I_3$ in the supply lines 20, 20a, digitize the measured current value, calculate a mean value of the digitized value, provide the measurement value with a time stamp of the time of the measurement and transmit these values over the communication bus to the feeder protection device 26.

In a step S11, the feeder protection device 26 receives a measurement value of the current in the first supply line 14 from the sensor 28. Since the measurement values from the sensors 32, 32a may be time-delayed due to the time, these values are traveling over the communication network 34, the feeder protection device 26 stores the measurement value 28 together with a time stamp of the measurement, for example in a memory of the feeder protection device 26.

In a step S12, the feeder protection device 26 receives the measurement value from the sensor 32 and sensor 32a. It has to be noted, that the time, when these values have been measured and the times, when these values arrive at the feeder protection device 26 may be different. Therefore, the feeder protection device 26 may also store the values of the sensors 32 and 32a together with the corresponding time stamps of the measurement.

In a step S14, when all measurement values corresponding to a certain time stamp have arrived at the feeder protection device 26, these values are supplied to the software module 43 which calculates an effective value 44 of these values. For example, the measurement values may be summed up. The effective value 44 is then supplied to the software module 46, which decides to disconnect the feeder 12 or not.

In the case, when the feeder 12 should be disconnected, in a step S16, the feeder protection device 26 actuates the switch 48 and disconnects the power grid 16 from the distribution feeder 12.

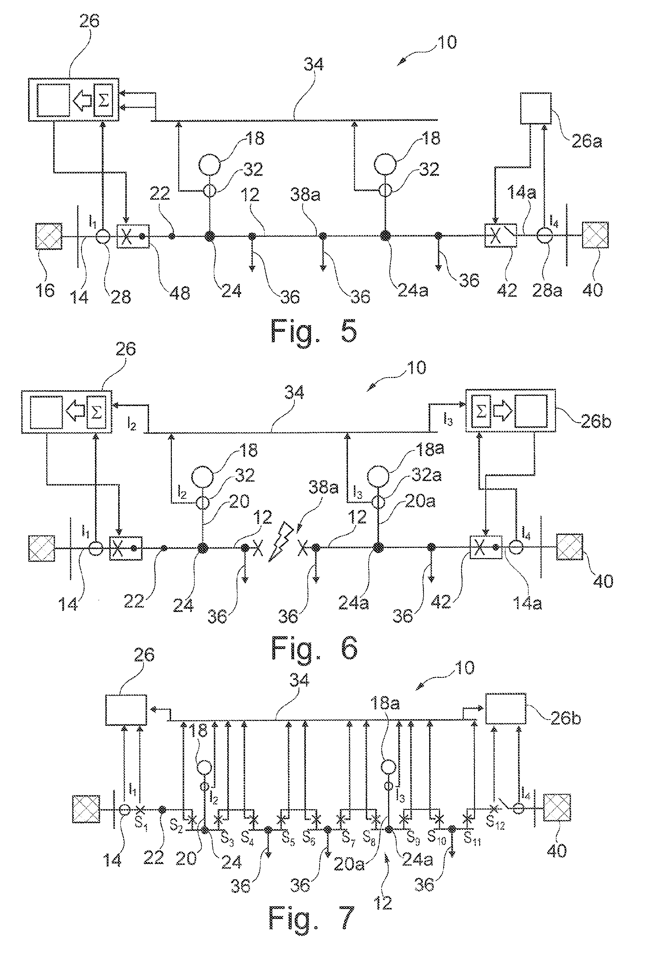

Fig. 5 shows a further embodiment of a power distribution system 10, in which a second grid 40 is connected to the power distribution feeder 12. In this embodiment, the protection device 26a for the distribution feeder 12 is not connected to the communication bus 34 and relies only on a measurement value $I_4$ from a sensor 28a in a supply line 14 connecting the second grid 40 with the power distribution feeder 12.

Fig. 6 shows a further embodiment of a power distribution system 10, wherein the feeder protection device 26b associated with the second grid 40 is also connected with the communication bus 34 and adapted to receive the measurement values I2, 13 from the sensors 32, 32a in the supply lines 20, 20a for the local energy sources 18, 18a. The feeder protection device 26b may be equally designed as the feeder protection device 26.

The segment 38a of the distribution feeder 12 has a fault.

The distribution feeder 12 shown in Fig. 6 has an open ring topology. This allows an isolation of the faulty segment 38a and supply of all healthy feeder segments. In case of a fault the affected segment 38a may be disconnected on either side. The distribution feeder 12 may be re-configured such that a normally open switch 42 at a second grid connection 14a is closed. Thus the second grid infeed now supplies all loads on healthy segments downstream (with respect to the primary grid connection) of the faulty segment 38a.

The second grid connection 14a is equipped with a feeder protection device 26b similar or equal to the feeder protection device 26. To protect the supplied part of the distribution feeder 12 correctly the relay 26b at the second grid connection 14a has to receive current measurements $I_3$ of the local power source 18a connected at this part. Hence, a communication infrastructure 34 is provided for transmitting measurements to the relay 26b from all local power sources 18, 18a that may be possibly on its side of the feeder 12 after a re-configuration. At the same time after a feeder 12 re-configuration the relay 26 at the main grid connection 14 must no longer take into consideration the current supplied by the local power source 18a connected on the downstream side of the faulty segment 38a.

Fig. 7 shows a further embodiment of a power distribution system 10. In the embodiment shown in Fig. 7, the feeder protection devices 26, 26b are further adapted to receive switch states of the switches $S_1$, $S_2$, $S_3$, $S_4$, $S_5$, $S_6$, $S_7$, $S_8$, $S_9$, $S_{10}$, $5_{11}$, and $S_{12}$ situated in the power distribution feeder 12. To this end, the switches $S_2$ to $S_{11}$ are adapted to send their switch state over the communication bus 34 to the feeder protection devices 26, 26b. The switch states of the switch $S_1$ located in the vicinity of the feeder protection device 26 may be directly received by the feeder protection device 26. Also the switch state of the switch $S_{12}$ in the vicinity of the feeder protection device 26b may be directly received from the feeder protection device 26b.

To allow for a flexible feeder re-configuration scheme without the necessity of a time-consuming and error-prone re-configuration of the measurement transmissions, the current measurements $I_2$, $I_3$ of all local power sources 18, 18a connected to the feeder 12 are transmitted to every feeder protection device 26, 26b. The procedure 43 for combining the measurements takes the actual feeder configuration into account. Every remote measurement is modified with a coefficient before aggregation into the total current infeed 44.

For example, the effective value 44 may be the first measurement value $I_1$, when the switch state $S_2$ of the distribution feeder 12 indicates that the second supply line 20 is electrically disconnected from the first supply line 14. The effective value 44 may be the sum of the first $I_1$ and second measurement value $I_2$, when the switch state $S_2$ indicates that the second supply line 20 is electrically connected with the first supply line 14.

For example with respect to the feeder protection device 26, this coefficient is calculated for each local power source 24, 24a from the status of the switches (and/or faulty segments) between the connection point 24, 24a of the respective local power source 18, 18a and the grid connection point 22. The coefficient evaluates to 1 if all switches between the local power source 18, 18a and the grid connection point 22 are in position "closed" thus the measurement is aggregated into the sum. If one or more switches between the connection point 24, 24a of the local power source 18, 18a and the grid connection point 22 is in the position "open" the coefficient evaluates to 0. Further, if a faulty segment 38a is between the connection point 24, 24a of the local power source 18, 18a and the grid connection point 22, the coefficient also evaluates to 0.

In other words, the algorithm 43 for measurement aggregation uses topology information about the feeder 12 to calculate the effective value 44 of the current, for example, which switch status influences a coefficient. In addition, the current status of every switch must be known for a correct evaluation of the coefficients. In case of remotely controllable switches the status information can be communicated to the relays 26, 26b. If the switches on the feeder 12 are not remotely controllable (and therefore may not be remotely observable), then the feeder re-configuration will not be an automatic process. A human operator may have to assess the current status of the feeder 12 and may send necessary commands for the feeder re-configuration. In this process it is possible to transmit information of a changed switch status to the relays 26, 26b - information which the operator already derived from assessing the feeder situation.

To transmit measurement values, IEC 61850-8.1 GOOSE messages may be used, which are multicast Ethernet packets. That means no logical point-to-point connection between the sender 32, 32a and the receiver 26, 26b need to be established. Instead, the sender sends the message to a multicast address. Potential receivers 26, 26b have to subscribe to that address and will receive a copy of the message. Furthermore, GOOSE messages are sent cyclically. Hence the receiver 26, 26b will cyclically receive an update of the current injection of the local power sources 18, 18a on the feeder 12.

The measurement values may be transmitted as RMS (root mean square) values. This is a good compromise between precision and the load put on the communication infrastructure 34 and on the message receiver 26, 26b. For the purpose of over current protection the RMS value may provide enough information for secure operation.

When the system is based on RMS values the requirements on time synchronisation may be low, i.e. in the range of some milliseconds.

In case the protection algorithm 46 (receiving the aggregated current infeed value 44) requires sampled measured values as input, this may impose higher requirements on the communication infrastructure 34 in terms of bandwidth. Also, the requirements on time synchronisation may be more strict.

For transmitting sampled measured values from the local power sources 18, 18a for aggregation, IEC 61850-9-2 may be considered as communication protocol, as it is used today in high-voltage transmission networks.

A further requirement for the transmission of measurement values in digital form may be time-stamping. At the receiver side 26, 26b the current measurements from the local power sources 18, 18a may have to be combined with local measurements taken at the same time instant (maybe as close as technical implementation allows). Hence, measurements may be transmitted with a timestamp of their creation time (or the measurement time). The measurement device 32, 32a, or at least the sending device must be time-synchronised with the receiver 26, 26b. A bi-directional communication infrastructure 34 allows using a time-synchronisation protocol, such as SNTP or IEEE 1588, between the receiver 26, 26b at the main substation and the sender 32, 32a at the site of the local power source 18, 18a.

At the main protection relay 26 the transmitted current measurements from the local power sources 18, 18a are combined with local current measurements in order to obtain the total current 44 injected on the feeder 12. If time-stamped RMS values of the current measured at the local power sources 18, 18a are transmitted via GOOSE messages, local measurements at the main relay 26, 26b may be buffered for the duration of the communication delay. In a 50 Hz system a new RMS value can be expected at a reduced sample rate, i.e. every 2 ms with a delay of a half cycle. The GOOSE messages are typically transmitted cyclically. If no value of the GOOSE payload changes, the cyclic messages are sent with rising time delay until a configurable maximum delay time $T_{max}$ (typically less or equal than 1 s). If a value change is to be reported by the GOOSE, the next message is transmitted immediate (typically less than 1 ms). A receiving frequency of 1 KHz, i.e. one new RMS value per 1 ms with a delay of a half cycle, is acceptable for over-current protection functions. Consequently, local measurements may have to be buffered for 1 cycle or 20 ms.

In order to combine with remote measurements the locally taken measurements may also be converted into their RMS form. Hence the combination of measurements requires the summation of RMS values of currents. Assuming a relatively unprecise time synchronization between the local and remote measurement devices (deviation around 10 ms), the allowable deviation in timestamps of the RMS values less than 10 ms, i.e. less than a half-cycle.

As described above, every remote RMS value is modified by a coefficient that expresses the combined status of the switches $S_2$ to $S_{11}$ between the connection point 24, 24a of the local power sources (or DERs) 18, 18a and the main relay 26, 26b. The formula for obtaining the total current infeed on the feeder $I_{total}$ (in RMS) may be given by:

$$I_{total} = I_{local} + \sum_{j=1}^{n} I_j * c_j$$

$$c_j = \prod_{k=1}^{j} s_k$$

$$s_i = \begin{cases} 1 & \text{if switch } i \text{ is closed} \\ 0 & \text{if switch } i \text{ is open} \end{cases}$$

$s_1...s_j$: status of switches upstream of DER $j$'s connection
$I_{local}$: current measurement at main relay
$I_j$: current measurement at DER j

It has to be considered that at the remote location 32, 32a the direction of the current will be calculated for each phase. The directional information may be sent as additional information to the aggregation point 26, 26b to reach a higher accuracy in the equation above. This could be the case e.g. when a local power source 18, 18a is in maintenance and a current is drawn from the feeder 12. In case, having no directional information, the current drawn from the feeder at the DER site 18, 18a would be added incorrectly as infeed.

Preferably, the functional modules and/or the configuration mechanisms are implemented as programmed software modules or procedures, respectively; however, one skilled in the art will understand that the functional modules and/or the configuration mechanisms can be implemented fully or partially in hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single proessor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| 10 | power distribution system |
| 12 | distribution feeder |
| 14 | supply line |
| 16 | first power grid |
| 18, 18a | local power source |
| 20, 20a | supply line |
| 22, 24 | connection point |
| 26, 26a, 26b | feeder protection device |
| 30 | protection device |
| 28, 32, 32a | sensor |
| 34 | communication bus |
| 36 | power consumer |
| 38 | feeder segment |
| 40 | second power grid |
| 32a | sensor |
| 43, 46 | software module |
| 44 | effective value |
| 42, 48 | switch |
| 50 | protection characteristic |

**Claims**

1. A method for protecting a component of a power distribution system with a distribution feeder (12), the method comprising the steps of:

Receiving, by a protection device (26), a first measurement value of a current $(I_1)$ in a first supply line (14) connected with the distribution feeder (12) at a first connection point (22);
Receiving, by the protection device (26), a second measurement value of a current $(I_2)$ in a second supply line (20) connected with the distribution feeder (12) at a second connection point (24);
Actuating, by the protection device (26) and based on the first and second measurement values, a switch (48, 42) to protect the component.

2. The method of claim 1,
wherein the first supply line (14) connects the distribution feeder (12) with a power grid (16),
wherein the second supply line (20) connects the distribution feeder (12) with a local power source (18),
wherein the switch (48) is adapted to electrically disconnect the component from the first supply line (14).

3. The method of claim 1 or 2, further comprising the step of:

Receiving, by the protection device (26), a switch state of a switch $(S_1)$ in the distribution feeder,
wherein the actuation of the switch (48) is additionally based on the switch state.

4. The method of one of the preceding claims, further comprising the step of:

Determining the actuation of the switch (48) by evaluating, with a protection function (50), an effective value (44) of a current in the distribution feeder calculated as a combination of the first and second measurement value.

5. The method according to claim 4,
wherein the effective value (44) is based on the first measurement value, when a switch state $(S_2)$ of the distribution feeder (12) indicates that the second supply line (20) is electrically disconnected from the first supply line,
wherein the effective value (44) is based on the combination of the first and second measurement value, when the switch state indicates that the second supply line is electrically connected with the first supply line.

**6.** The method of one of the preceding claims, further comprising the step of:

Transmitting the second measurement value over a communication network (34).

**7.** The method of one of the preceding claims, wherein the communication network (34) is an Ethernet network.

**8.** The method of one of the preceding claims, further comprising the step of:

Transmitting the second measurement value as an average value of the current.

**9.** The method of one of the preceding claims, further comprising the step of:

Providing the second measurement value with a timestamp, the timestamp indicating the time of the measurement of the second measurement value.

**10.** The method of claim 9, further comprising the step of:

Buffering the first measurement value until a second measurement value provided with a timestamp matching a time of measurement of the first measurement value has been received.

**11.** The method of claim 10, further comprising the step of:

Buffering the first and second measurement values such that values with equal timestamps are used for calculating an effective value (44) of a current in the distribution feeder to be used for executing a protection function.

**12.** A computer-readable medium, in which a computer program for protecting a component of a power distribution system connected to a distribution feeder (12) is stored, which, when being executed by a processor, is adapted to carry out the steps of the method of claims 1 to 11.

**13.** A program element for protecting a component of a power distribution system connected to a distribution feeder (12), which, when being executed by a processor, is adapted to carry out the steps of the method of claims 1 to 11.

**14.** Protection device (26, 48) adapted to carry out the steps of the method of claims 1 to 11.

**15.** Power distribution system (10), comprising:

a distribution feeder (12) connected to a power grid (16),
a local power source (18) connected with the distribution feeder (12),
a protection device (26) according to claim 14.

Fig. 1

Fig. 2

Fig. 3

Fig. 4

Fig. 5

Fig. 6

Fig. 7

Europäisches
Patentamt

European
Patent Office

Office européen
des brevets

## EUROPEAN SEARCH REPORT

Application Number

EP 10 16 1512

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 780 858 A1 (ABB TECHNOLOGY AG [CH]) 2 May 2007 (2007-05-02) * paragraphs [0017], [0020] - [0022]; figure 1 * | 1,3,4, 6-15 | INV. H02H7/26 H02J3/38 |
| A | US 2007/086133 A1 (LOUCKS DAVID G [US] ET AL) 19 April 2007 (2007-04-19) * paragraph [0032]; figure 2 * | 2,5 | |
| A | FUNMILAYO H B ET AL: "An approach to mitigate the impact of distributed generation on the Overcurrent Protection scheme for radial feeders" POWER SYSTEMS CONFERENCE AND EXPOSITION, 2009. PES '09. IEEE/PES, IEEE, PISCATAWAY, NJ, USA, 15 March 2009 (2009-03-15), pages 1-11, XP031450800 ISBN: 978-1-4244-3810-5 * paragraph [00II]; figures 3,4 * | 2,5 | |
| A | US 2002/080535 A1 (SWINDLER DAVID L [US] ET AL) 27 June 2002 (2002-06-27) * paragraphs [0025] - [0027]; figures 3,4 * | 1,14 | TECHNICAL FIELDS SEARCHED (IPC) H02H |

The present search report has been drawn up for all claims

| Place of search | Date of completion of the search | Examiner |
|---|---|---|
| The Hague | 27 August 2010 | Colombo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 10 16 1512

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2010

| Patent document cited in search report | | Publication date | Patent family member(s) | | Publication date |
|---|---|---|---|---|---|
| EP 1780858 | A1 | 02-05-2007 | WO | 2007051322 A1 | 10-05-2007 |
| US 2007086133 | A1 | 19-04-2007 | NONE | | |
| US 2002080535 | A1 | 27-06-2002 | NONE | | |

EPO FORM P0459

For more details about this annex : see Official Journal of the European Patent Office, No. 12/82